# NEW EUROPEAN PATENT SPECIFICATION

(11) **EP 1 554 220 B2**
(45) Date of publication and mention of the opposition decision: **05.11.2014**
(45) Mention of the grant of the patent: 21.01.2009
(21) Application number: 03808927.2
(22) Date of filing: 29.09.2003
(51) Int. Cl.: C01B 33/18, C01B 33/148, C01B 33/157, C01B 33/159, C09C 1/30, C08K 9/06, C04B 14/06, C04B 20/10, C04B 41/68, C09D 101/00

(54) **USE OF A COLLOIDAL SILICA DISPERSION**
VERWENDUNG EINER SILICIUMDIOXIDDISPERSION
UTILISATION D'UNE DISPERSION DE SILICE COLLOIDALE

(30) Priority: 14.10.2002 EP 02445132
(43) Date of publication of application: 20.07.2005
(73) Proprietor: Akzo Nobel N.V., 6800 SB Arnhem (NL); Eka Chemicals AB, 445 80 Bohus (SE)
(72) Inventor: GREENWOOD, Peter, S-413 18 Goteborg (SE)
(74) Representative: De Vries, Adriaan Jacobus
(86) International application number: PCT/SE2003/001510
(87) International publication number: WO 2004/035473

(56) References cited:
- EP-A- 0 216 047
- EP-B1- 0 996 588
- WO-A-01/48098
- WO-A-99/36359
- JP-A- H04 206 801
- JP-A- H06 122 539
- JP-A- 2000 001 547
- JP-A- 2001 213 662
- KR-A- 20020 011 568
- KR-B1- 100 332 543
- US-A- 4 927 750
- US-A- 5 254 621
- US-A- 6 015 843
- PATENT ABSTRACTS OF JAPAN vol. 015, no. 154 (C-0825), 18 April 1991 (1991-04-18) & JP 03 031380 A (DAIHACHI CHEM IND CO LTD), 12 February 1991 (1991-02-12)
- Excerpt from SNOWTEX 40 brochur, no apparent publication date
- ILLER, R.: 'The chemistry of silica', 1979, JOHN WILEY & SONS, INC. pages 324 - 325
- Momentive performance materials Gmbh, Safety data sheet of SILQUEST A-187 silane/TSD/215KG, print date 14.03.2008
- Sigma-Aldrich, Material Safety Data Sheet of Ludox HS-40 colloidal silica, no apparent publication date
- Sodium Oxide, download from Wikipedia: http://en.wikipedia.org/wiki/Sodium_oxide, no apparent publication date
- Decision revoking the European Patent EP-B-1554221, published on 19.10.2011
- Properties of Klebosol, download from http://www.klebosol.com/particle.htm, no apparent publication date

## Description

The present invention relates to the use of a stable substantially aqueous silanized colloidal silica dispersion, as defined in claim 1.

Colloidal silica dispersions have been used for a long time, e.g. as a coating material to improve adhesive properties as well as increasing wear and water resistance of various materials. However, these dispersions, especially highly concentrated colloidal silica dispersions, are liable to gelling or precipitation of silica, which makes longer storage impossible.

English language abstract of JP 3258878 discloses a coating composition prepared by blending an alkoxysilane with a silica sol prepared by reacting a hydrosilicofluoric acid or ammonium salt thereof with ammonia in an aqueous medium, separating formed precipitated silica from the aqueous medium and grinding the precipitated silica in wet state.

A method of producing a stable substantially aqueous silanized colloidal silica dispersion having a silica content of at least 20 wt% comprises mixing at least one silane compound and colloidal silica particles, wherein the weight ratio of silane to silica, is from 0.003 to 0.2, preferably from 0.006 to 0.15, and most preferably from 0.015 to 0.1.

The mixing is preferably carried out at a temperature below 50 °C, more preferably below 35°C. Temperatures above 50 °C may result in at least partial selfcondensation of the silane which reduces the stability of the dispersion, the adhesive properties as well as the wear and water resistance properties the dispersion imparts. The time of mixing is not critical but is suitably up to 3 hours, preferably up to 2 hours. However, a dispersion may only need up to 10 minutes, or preferably only up to 5 minutes, or most preferably only up to 1 minute of mixing depending on the types of silane and colloidal silica particles mixed. Preferably, silane is added to the colloidal silica particles. Preferably, the silane is diluted before mixing it with colloidal silica particles, which are preferably dispersed in an aqueous silica sol. Preferably, silane is diluted with water to form a premix of silane and water, suitably in a weight ratio from 1:8 to 8:1, preferably from 3:1 to 1:3, and most preferably from 1.5:1 to 1:1.5. The resulting solution is substantially clear and stable and easy to add to the colloidal silica particles. The time of mixing the colloidal silica particles and premixed aqueous silane is suitably up to 5 minutes, preferably up to 1 minute.

The mixing may be carried out at a pH from 1 to 13, preferably from 6 to 12, and most preferably from 7.5 to 11.

By the term "stable", particularly in the context "stable substantially aqueous silanized colloidal silica dispersion" is meant that the dispersion or the silanized colloidal silica particles dispersed therein, does not substantially gel or precipitate within a period of preferably at least 2 months, more preferably at least 4 months, and most preferably at least 5 months at normal storage in room temperature (20 °C).

Preferably, the relative increase in viscosity of the dispersion two months after the preparation thereof is lower than 100%, more preferably lower than 50%, and most preferably lower thank 20%.

Preferably, the relative increase in viscosity of the dispersion four months after the preparation thereof is lower than 200%, more preferably lower than 100%, and most preferably lower than 40%.

Colloidal silica particles, which here also are referred to as silica sols, may be derived from e.g. precipitated silica, micro silica. (silica fume), pyrogenic silica (fumed silica) or silica gels with sufficient purity, and mixtures thereof.

Colloidal silica particles and silica sols may be modified and can contain other elements such as amines, aluminium and/or boron, which can be present in the particles and/or the continuous phase. Boron-modified silica sols are described in e.g. US 2,630,410. The aluminium modified silica particles suitably have an Al₂O₃ content of from 0.05 to 3 wt%, preferably from 0.1 to 2 wt%. The procedure of preparing an aluminium modified silica sol is further described in e.g. "The Chemistry of Silica", by Iler, K. Ralph, pages 407-409, John Wiley & Sons (1979) and in US 5 368 833.

The colloidal silica particles suitably have an average particle diameter ranging from 2 to 150 nm, preferably from 3 to 50 nm, and most preferably from 5 to 40 nm. Suitably, the colloidal silica particles have a specific surface area from 20 to 1500, preferably from 50 to 900, and most preferably from 70 to 600 m²/g.

The colloidal silica particles preferably have a narrow particle size distribution, i.e. a low relative standard deviation of the particle size. The relative standard deviation of the particle size distribution is the ratio of the standard deviation of the particle size distribution to the mean particle size by numbers. The relative standard deviation of the particle size distribution preferably is lower than 60 % by numbers, more preferably lower than 30 % by numbers, and most preferably lower than 15 % by numbers.

The colloidal silica particles are dispersed in a substantially aqueous solvent, suitably in the presence of stabilising cations such as K⁺, Na⁺, Li⁺, NH₄⁺, organic cations, primary , secondary, tertiary, and quaternary amines, and mixtures thereof so as to form an aqueous silica sol. However, also dispersions comprising organic solvents miscible with water, e.g. lower alcohols, acetone or mixtures thereof may be used, preferably in an amount of from 1 to 20, more preferably from 1 to 10, and most preferably from 1 to 5 volume percent of the total volume. However, aqueous silica sols without any further solvents are preferably used. Preferably, the colloidal silica particles are negatively charged. Suitably, the silica content in the sol is from 20 to 80, preferably from 25 to 70, and most preferably from 30 to 60 wt%. The higher the silica content, the more concentrated the resulting silanized colloidal silica dispersion. The pH of the silica sol suitably is from 1 to 13, preferably from 6 to 12, and most preferably from 7.5 to 11. However, for aluminium-modified silica sols, the pH suitably is from 1 to 12, preferably from 3.5 to 11.

The silica sol preferably has an S-value from 20 to 100, more preferably from 30 to 90, and most preferably from 60 to 90.

It has been found that dispersions with an S-value within these ranges can improve the stability of the resulting dispersion. The S-value characterises the extent of aggregation of colloidal silica particles, i.e. the degree of aggregate or microgel formation. The S-value has been measured and calculated according to the formulas given in J. Phys. Chem. 60(1956), 955-957 by Iler, R.K. & Dalton, R.L.

The S-value depends on the silica content, the viscosity, and the density of the silica sol. A high S-value indicates a low microgel content. The S-value represents the amount of SiO₂ in percent by weight present in the dispersed phase of the silica sol. The degree of microgel can be controlled during the production process as further described in e.g. US 5368833.

The silane compounds can form stable covalent siloxane bonds (Si-O-Si) with the silanol groups or be linked to the silanol groups, e.g. by hydrogen bondings, on the surface of the colloidal silica particles.

Suitable silane compounds include tris-(trimethoxy)silane, octyl triethoxysilane, methyl triethoxysilane, methyl trimethoxysilane; isocyanate silane such as tris-[3-(trimethoxysilyl)propyl]isocyanurate; gamma-mercaptopropyl trimethoxysilane, bis-(3-[triethoxysilyl]propyl)polysulfide, beta-(3,4-epoxycyclohexyl)-ethyl trimethoxysilane; silanes containing an epoxy group (epoxy silane), glycidoxy and/or a glycidoxypropyl group such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane; silanes containing a vinyl group such as vinyl triethoxysilane, vinyl trimethoxysilane, vinyl tris-(2-methoxyethoxy)silane, vinyl, methyldimethoxysilane, vinyl triisopropoxysilane; gamma-methacryloxypropyl trimethoxysilane, gamma-methacryloxypropyl triisopropoxysilane, gamma-methacryloxypropyl triethoxysilane, octyltrimethyloxy silane, ethyltrimethoxy silane, propyltriethoxy silane, phenyltrimethoxy silane, 3-mercaptopropyltriethoxy silane, cyclohexyltrimethoxy silane, cyclohexyltriethoxy silane, dimethyldimethyoxy silane, 3-chloropropyltriethoxy silane, 3-methacryoxypropyltrimethoxy silane, i-butyltriethoxy silane, trimethylethoxy silane, phenyldimethylethoxy silane, hexamethyldisiloxane, trimethylsilyl chloride, vinyltriethoxy silane, hexamethyldisilizane, and mixtures thereof. US 4,927,749 discloses further suitable silanes which may be used in the present invention. The most preferred silanes, however, are epoxy silanes and silanes containing a glycidoxy or glycidoxypropyl group, particularly gamma-glycidoxypropyltrimethoxysilane and/or gamma glycidoxypropyltmethyldiethoxysilane.

According to a preferred embodiment, an organic binder is subsequently mixed with the dispersion of silanized colloidal silica particles. The term "organic binder" includes latex, water soluble resins, polymers and mixtures thereof. Water soluble resins and polymers can be of various types such as e.g., poly(vinyl alcohols), modified poly(vinyl alcohols), polycarboxylates, poly(ethylene glycols), poly(propylene glycols), polyvinylpyrrolidones, polyallylamines, poly(acrylic acids), polyamidamines, polyacrylamides, polypyrroles, proteins such as casein, soybean proteins, synthetic proteins, polysaccharides such as cellulose derivatives such as methylcelluloses, ethylcelluloses, hydroxyethylcelluloses, methylhydroxyethylcelluloses, ethylhydroxyethylcelluloses or carboxymethylcelluloses, starches or modified starches; chitosan, polysaccharide gums such as e.g. guar gums, arabic gums, xanthan gums and mastic gums and mixtures or hybrids thereof. The term "latex" includes synthetic and/or natural latices based on emulsions of resins and/or polymers of various types, e.g. styrene-butadiene polymers, butadiene polymers, polyisoprene polymers, butyl polymers, nitrile polymers, vinylacetate homopolymers, acrylic polymers such as vinylicacrylic copolymers or styrene-acrylic polymers, polyurethane polymers, epoxy polymers, cellulosic polymers such as micro cellulose, melamine resins, neoprene polymers, phenol based polymers, polyamide polymers, polyester polymers, polyether polymers, polyolefin polymers, polyvinyl butyral polymers, silicones; e.g. silicone rubbers and silicone polymers (e.g. silicone oils), urea-formaldehyde polymers, vinyl polymers or mixture or hybrids thereof.

Preferably, the organic binder is mixed with the silanized silica particles in a weight ratio of silica to organic binder from 0.01 to 4, more preferably from 0.1 to 2, and most preferably from 0.2 to 1.

The invention relates to the use of a stable substantially aqueous silanized colloidal silica dispersion having a silica content of at least 20 wt%, wherein the weight ratio of silane to silica in the dispersion is from 0.003 to 0.2 as an additive to cementitious materials, preferably from 0.006 to 0.15, and most preferably from 0.015 to 0.1.

The weight of silane in the dispersion is calculated as the total amount of possible free silane compounds and silane derivatives or groups bound or linked to the silica particles.

Preferably, the silica content in the dispersion is from 20 to 80, more preferably from 25 to 70 and most preferably from 30 to 60 Wt%. This is beneficial also in view of the reduced transportation cost thereof.

The stability of the dispersion facilitates the handling thereof since it allows for storage and need not be prepared on site immediately before usage, and does not contain any hazardous amounts of harmful solvents.

The substantially aqueous dispersion preferably does not contain any organic solvent. However, according to one embodiment, an organic solvent may be comprised in the aqueous dispersion in an amount of from 1 to 20, preferably from 1 to 10, and most preferably from 1 to 5 volume percent of the total volume. This is due to the fact that for some applications, a certain amount of organic solvents may be present without any substantial detrimental effects.

The dispersion may contain besides silanized colloidal silica particles also, at least to some extent, non-silanized colloidal silica particles depending on the size of the silica particles; weight ratio of silane to silica, type of silane compounds, reaction conditions etc. Suitably, at least 40 wt% of the colloidal silica particles are silane-modified, preferably at least 65 wt%, more preferably at least 90 wt%, and most preferably at least 99 wt%. The silanized colloidal silica dispersion may comprise besides silane in the form of silane groups or silane derivatives bound or linked to the surface of the silica particles also at least to some extent freely dispersed unbound silane compounds. Suitably, at least 40, preferably at least 60, more preferably at least 75, even more preferably at least 90, and most preferably at least 95 wt% of the silane compounds are bound or linked to the surface of the silica particles. Thus, by this method, the silica particles are surface-modified.

Preferably, from 1 to 90%, more preferably from 5 to 80, and most preferably from 10 to 50 % by number of the silanol groups on the colloidal silica particles that are capable of binding or linking to the silane groups bind a silane group. Preferably, the colloidal silica particles bind or link from 0.1 to 5.5, more preferably from 0.25 to 4, and most preferably from 0.5 to 2.5 silane groups or derivatives/nm² on the surface area thereof.

According to a preferred embodiment, the silanized colloidal silica dispersion comprises an organic binder, preferably a latex, as further described herein. The total solid content of the dispersion comprising organic binder and silanized colloidal silica particles suitably is from 20 to 80, preferably from 25 to 65, and most preferably from 30 % to 50 wt%. The weight ratio of silica to organic binder on a dry base is suitably in the range from 0.05 to 4, preferably from 0.1 to 2, and most preferably from 0.2 to 1.

The dispersion comprising organic binders is capable of forming a coating film on various kinds of substrates.

According to a preferred embodiment, the silanized colloidal silica particles and the organic binder are present as discrete particles in the dispersion.

The invention being thus described, it will be obvious that the same may be varied in many ways. Such variations are not to be regarded as a departure from the scope of the present invention, and all such modifications as would be obvious to one skilled in the art are intended to be included within the scope of the claims. While the examples here bellow provide more specific details of the reactions, the following general principles may here be disclosed. The following examples will further illustrate how the described invention may be performed without limiting the scope of it.

All parts and percentages refer to part and percent by weight, if not otherwise stated.

### Examples

Illustrating the preparation of the dispersion for use according to claim 1.

The silanes A and B used below are available from Crompton S.A. in Switzerland.
A:Silquest Wetlink 78 (glycidoxy-containing epoxy-silane),
B:Silquest A-187 (glycidoxy-containing epoxy-silane)

The silica sols used in the examples below available from Eka Chemicals AB, Sweden, are shown in table 1 below:

**Table 1**

| Sol No | Silica sol | Silica content (wt%) | Particle size, (nm) | Specific surface area (m²/g) | Surface modification | pH |
|---|---|---|---|---|---|---|
| A1 | Bindzil® 30/220 | 30 | 12 | 220 | None | 9-10 |
| A2 | Nyacol® 1430 LS | 30 | 11 | 240 | None | 8-9 |
| A3 | Bindzil® 3051220 | 30 | 12 | 220 | Aluminium | 9-10 |
| A4 | Nyacol® DP 5110 | 30 | 11 | 250 | Aluminium | 6-7 |
| A5 | Bindzil® 30/360 | 30 | 7 | 360 | None | 9-10 |
| A6 | Bindzil® 40/130 | 40 | 22 | 130 | None | 9-10 |

### Preparation of silanized colloidal silica dispersions

Silane samples A and B were added dropwise to the silica sols at moderate agitation for 5 minutes in accordance with table 2. The agitation was continued for 2 hours. Premixed samples of water-diluted silane were prepared by mixing water and silanes in equal amounts (see table 4). The mixtures were slowly agitated until clear solutions were obtained. The aqueous silane were then mixed with a silica sol under moderate agitation. All samples were prepared at room temperature, unless otherwise stated.

**Table 2**

| Silanized silica sol No | Silica sol | Colloidal, silica weight (g) | Silane | Silane weight (g) | Stable silanized silica sol |
|---|---|---|---|---|---|
| 1 | A1 | 30 | A | 1 | YES |
| 2 | A2 | 30 | A | 1 | YES |
| 3 | A3 | 30 | A | 1 | YES |
| 4 | A4 | 30 | A | 1 | YES |
| 5 | A1 | 30 | B | 1 | YES |
| 6 | A3 | 30 | B | 1 | YES |
| 7 | A5 | 30 | B | 3 | YES |
| 8 | A6 | 40 | B | 2 | YES |

Table 2 shows that all obtained silanized silica sols were stable in the above weight ratios. The term "stable" as used in table 2 means dispersions that do not become white, do not gel and do not precipitate within 5 month at normal storage in room temperature. Table 3 shows further samples of prepared silanized silica sols,

**Table 3**

| Silanized silica sol No | Silica sol | Colloidal silica weight (g) | Silane | Silane weight (g) | Stable product |
|---|---|---|---|---|---|
| 9 | A3 | 30 | B | 10 | NO |
| 10 | A1 | 30 | B | 10 | NO |
| 11 | A3 | 30 | B | 1 | YES |

Table 3 shows the influence of the weight ratio of silane to silica. A too high weight ratio renders the silanized silica sol unstable as can be seen from products no. 9 and 10, whereas product 11 is stable.

**Table 4**

| Silanized colloidal silica No | Silica sol | Colloidal silica weight (g) | Silane diluted in water (1:1) | Weight (g) (silane-water solution; 1:1) | Stable product |
|---|---|---|---|---|---|
| 13 | A1 | 30 | B | 20 | NO |
| 14 | A1 | 30 | B | 5 | YES |
| 15 | A5 | 30 | A | 6 | YES |
| 16 | A5 | 450 | A | 75 | YES |
| 17 | A5 | 450 | B | 75 | YES |
| 18 | A3 | 600 | A | 60 | YES |

Table 4 also shows that the silanized silica sols (products 14-18) are stable in contrast to product 13 where the weight ratio silane to silica is too high.

### Freezing stability

Samples of 100 ml sol was put into the freezer for 24 h at -20°C, The samples stood 16 h in room temperature before evaluation (cf. observation cycle 1). The process was repeated once (cf. observation cycle 2). The samples were evaluated optically. As a result, it was noted that a clear low viscous aqueous dispersion with only traces of precipitates of the silanized silica sol was seen for silanized sol No 16 whereas sol No A5 precipitated totally and became non-fluid.

**Table 7**

| No | Sol Samples | Observation cycle 1 | Observation cycle 2 |
|---|---|---|---|
| 1 | 16 | very few small flakes/ precip. | very few small flakes/ precip. |
| 2 | A5 | White precipitates - no sol | White precipitates - no sol |

### Viscosity at high colloidal silica concentration

The silica sols were concentrated by vacuum evaporation at 60°C in a 20 l rotary evaporator. The time for concentration was 2 hours: The silica sols were-then diluted to desired silica, content with de-ionised water (cf. table 8 below). The viscosity was measured at 20°C by a Brookfield viscometer both initially and after 4 months storage in room temperature. As can be seen from table 8 below, the silanized sol offers better stability against gelling and viscosity increase. For the silanized sol the viscosity decreases over time, even at very high silica concentrations! This indicates increased stability against gelling and viscosity increase. The silanized colloidal silica products can therefor be produced and stored at higher silica concentrations than non-silanized colloidal silica and still have a low viscosity that makes handling easier.

**Table 8**

| Sol No | Colloidal silica, (%) | Viscosity (cP), initial | Viscosity (cP), 4 months |
|---|---|---|---|
| A3 | 46.0 | 50.1 | gelled after 61 days |
| A3 | 44.0 | 30.1 | 626 |
| A3 | 42.0 | 19.9 | 31.5 |
| 18 | 47.3 | 91.5 | 65.0 |
| 18 | 46.0 | 64.1 | 38.5 |
| 18 | 44.0 | 36.6 | 20.8 |
| 18 | 42.0 | 23.0 | 13.8 |

## Claims

1. Use of a silanized colloidal silica dispersion wherein the dispersion is a stable aqueous silanized colloidal silica dispersion having a silica content of at least 20 wt% having a weight ratio of silane to silica from 0.003 to 0.2, as an additive to cementitious materials.

## Patentansprüche

1. Verwendung einer silanisierten kolloidalen Siliziumdioxid-Dispersion, wobei die Dispersion eine stabile wasserbasierte kolloidale Siliziumdioxid-Dispersion ist mit einem Siliziumdioxidgehalt von wenigstens 20% Gew und mit einem Gewichtsverhältnis Silan/ Siliziumdioxid von 0.003 bis 0.2, als Additiv für zementöse Materialien.

## Revendications

1. Utilisation d'une dispersion de silice colloïdale silanisée dans laquelle la dispersion est une dispersion aqueuse stable de silice colloïdale silanisée ayant une teneur en silice d'au moins 20% en poids ayant un rapport en poids du silane sur la silice allant de 0,003 à 0,2, en tant qu'additif à des matériaux cimentaires.
